(19) Europäisches Patentamt
European Patent Office
Office européen des brevets

(11) EP 4 456 232 A1

(12) EUROPEAN PATENT APPLICATION

(43) Date of publication:
**30.10.2024 Bulletin 2024/44**

(21) Application number: **23220248.1**

(22) Date of filing: **27.12.2023**

(51) International Patent Classification (IPC):
***H01M 10/0525*** *(2010.01)* ***H01M 4/525*** *(2010.01)*
***H01M 4/587*** *(2010.01)* ***H01M 4/38*** *(2006.01)*
***H01M 10/0568*** *(2010.01)* ***H01M 10/0569*** *(2010.01)*
***H01M 10/0567*** *(2010.01)* ***H01M 10/42*** *(2006.01)*

(52) Cooperative Patent Classification (CPC):
**H01M 10/0525; C01B 25/455; C01B 35/121; H01M 4/38; H01M 4/525; H01M 4/587; H01M 10/0567; H01M 10/0568; H01M 10/0569; H01M 10/4235;** H01M 2004/027; H01M 2004/028; H01M 2300/0025; Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.12.2022 CN 202211710076**

(71) Applicant: **Ningde Amperex Technology Ltd.**
**Ningde City, Fujian 352100 (CN)**

(72) Inventors:
- **ZHANG, Lilan**
**Ningde City, Fujian Province, People s Republic of China, 352100 (CN)**
- **PENG, Xiexue**
**Ningde City, Fujian Province, People s Republic of China, 352100 (CN)**
- **YUAN, Xiao**
**Ningde City, Fujian Province, People s Republic of China, 352100 (CN)**
- **TANG, Chao**
**Ningde City, Fujian Province, People s Republic of China, 352100 (CN)**

(74) Representative: **Icosa**
**83 avenue Denfert-Rochereau**
**75014 Paris (FR)**

# (54) ELECTROCHEMICAL DEVICE AND ELECTRONIC DEVICE

(57) An electrolytic solution includes an additive A and an additive B. The additive A includes at least one of additives represented by Formula I or Formula II:

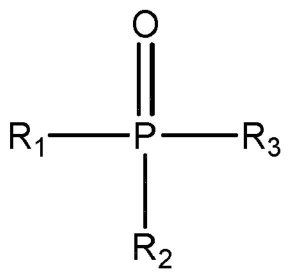
Formula I,
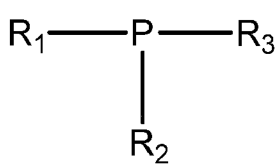
Formula II.

The additive B includes at least one of lithium difluorophosphate, lithium difluoro(oxalato)borate, or lithium bis(oxalato)borate. The additive A and additive B added in the electrolytic solution can alleviate the voltage drop of the electrochemical device during high-temperature storage, and increase the capacity retention rate of the electrochemical device during high-temperature storage. Moreover, when the electrochemical device is in a fully charged state, the additive A and additive B can implement decomposition reactions at a cathode interface successively to form a double-protected inorganic CEI layer, thereby improving voltage stability of the cathode interface under high potentials.

EP 4 456 232 A1

## Description

### TECHNICAL FIELD

This application relates to the technical field of electrochemistry, and in particular, to an electrochemical device and an electronic device.

### BACKGROUND

Electrochemical devices (such as a lithium-ion battery) are characterized by a high energy density, a low maintenance cost, a low self-discharge rate, a long cycle life, no memory effect, a stable working voltage, environmental friendliness, and the like, and therefore, have attracted extensive attention and are widely used in the fields such as portable electronic devices (including electronic products such as a mobile phone, a notebook computer, and a camera), electric tools, and electric vehicles.

With the development of electrochemical devices, higher requirements have been put forward for the electrochemical devices, such as a high capacity, a long cycle life, high safety, and a wide working temperature. The voltage stability of the electrochemical devices is relatively low. For example, when an electronic device is idle for a long time, especially left idle in a fully charged state, the open circuit voltage of the electrochemical device will drop, resulting in a loss of the capacity of the electrochemical device. When the voltage drop is severe, for example, from 4.4 V to 3.0 V or less, the power of the electrochemical device will be exhausted quickly, and the device will automatically shut down, bringing inconvenience to users.

### SUMMARY

Some embodiments of this application provide an electrochemical device and an electronic device to solve the problem of poor voltage stability of the electrochemical device.

According to a first aspect, this application provides an electrochemical device, including an electrolytic solution. The electrolytic solution includes an additive A and an additive B.

(1) The additive A includes at least one of additives represented by Formula I or Formula II:

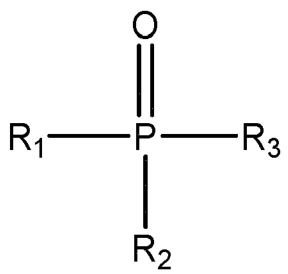

Formula I ,

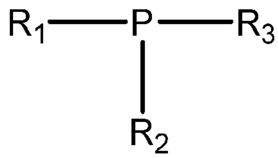

Formula II.

In the formulas above, $R_1$ and $R_2$ each independently selected from fluorine, trimethylsilyl, alkyl, alkenyl, alkynyl, or a group represented by Formula a:

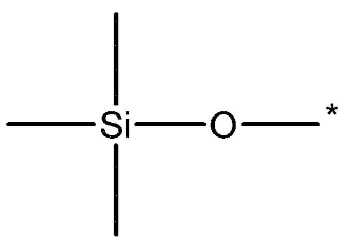

Formula a

In the formula above, $R_3$ is selected from fluorine, phenyl, alkyl, or alkenyl; and

(2) The additive B includes at least one of lithium difluorophosphate, lithium difluoro(oxalato)borate, or lithium bis(oxalato)borate.

In some exemplary embodiments, the additive A includes at least one of Compound 1, Compound 2, Compound

3, or Compound 4:

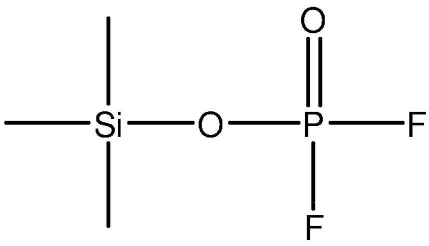

Compound 1 ,

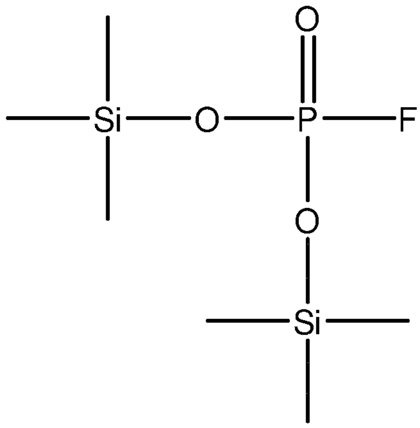

Compound 2,

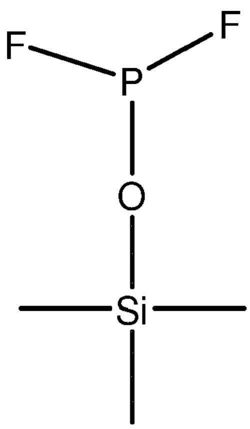

Compound 3 , or

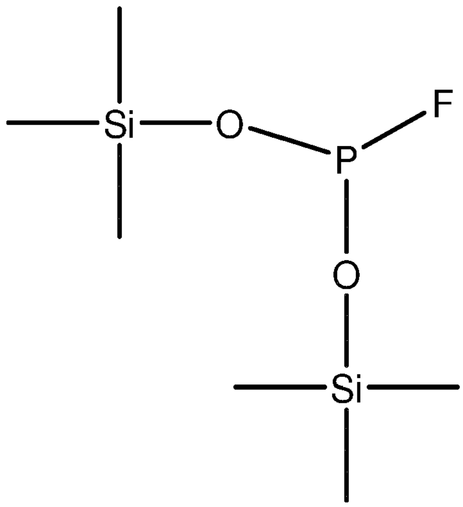

Compound 4.

In some exemplary embodiments, a mass percent of the additive A in the electrolytic solution is X ppm, a mass percent of the additive B in the electrolytic solution is Y%, and the electrochemical device satisfies:

$$\text{condition 1: } 1.00 \times 10^3 \leq X/Y \leq 1.10 \times 10^6.$$

The electrochemical device further satisfies at least one of the following conditions:

$$\text{condition 2: } 45 \leq X \leq 11000;$$

or

$$\text{condition 3: } 0.005 \leq Y \leq 2.1.$$

In some exemplary embodiments, the electrochemical device satisfies at least one of the following conditions:

$$\text{condition a: } 500 \leq X \leq 10000;$$

$$\text{condition b: } 0.01 \leq Y \leq 1.5;$$

or

$$\text{condition c: } 1.00 \times 10^3 \leq X/Y \leq 5 \times 10^5.$$

In some exemplary embodiments, the electrolytic solution further includes an additive C. The additive C includes at least one of an ester compound or difluoropyridine. A reduction potential of the additive C at 25 °C falls within 0.8 V to 1.3 V

In some exemplary embodiments, the ester compound includes at least one of fluoroethylene carbonate, vinylene carbonate, triallyl phosphate, or tripropargyl phosphate.

In some exemplary embodiments, a mass percent of the additive C in the electrolytic solution is Z%, and Z satisfies: $0.01 \leq Z \leq 9$.

In some exemplary embodiments, a mass percent of the additive C in the electrolytic solution is Z%, and Z satisfies: $3 \leq Z \leq 8$.

In some exemplary embodiments, the electrochemical device further includes a negative electrode plate. The negative electrode plate includes a negative material layer. The negative material layer includes a negative active material.

The negative active material includes artificial graphite, and a peak intensity ratio D/G between a D band and a G band in a Raman spectrum of the artificial graphite is 0.25 to 0.95.

In some exemplary embodiments, the electrochemical device further includes a positive electrode plate. The positive electrode plate includes a positive material layer. The positive material layer includes a positive active material. The positive active material includes a ternary material.

The positive active material further includes at least one of aluminum or zirconium. Based on a mass of the positive active material, a mass percent of the aluminum or zirconium is H%, and H satisfies: $0.01 \leq H \leq 1.00$.

In some exemplary embodiments, the positive active material includes a ternary material. The ternary material includes at least one of a nickel-cobalt-aluminum-based ternary material or a nickel-cobalt-manganese-based ternary material.

According to a second aspect, this application provides an electronic device, including the electrochemical device.

The electrochemical device and electronic device according to some embodiments of this application achieve at least the following beneficial effects:

The additive A and additive B added in the electrolytic solution can alleviate the voltage drop of the electrochemical device during high-temperature storage, and increase the capacity retention rate of the electrochemical device during high-temperature storage. When the electrochemical device is in a fully charged state, continuous reactions of the electrolytic solution at the cathode interface lead to a decrease in the positive electrode potential, and eventually lead to a decrease in the open circuit voltage of the battery. When the additive A and the additive B exist in the electrolytic solution, the additive A and additive B can implement decomposition reactions at the cathode interface successively to form a double-protected inorganic CEI layer, thereby improving voltage stability of the cathode interface under high potentials.

When the additive C is added into the electrolytic solution, an effective SEI layer can be formed at an anode interface to ensure stability of the anode interface and further alleviate the voltage drop during storage. In addition, when the D/G ratio of the graphite in the negative active material is less than 0.25, graphite edges related to intercalation or deintercalation of lithium ions are not enough to ensure effective reaction of the additive C on the graphite. However, when the D/G ratio of the graphite in the negative active material is higher than 0.95, it means that the amount of non-crystalline carbon on the surface of the carbon material is relatively large, and the irreversible capacity is high, thereby hindering exertion of the capacity of the battery. Therefore, the D/G ratio of the negative active material is controlled to fall within a range of 0.25 to 0.95.

In addition, existence of doping elements in the positive active material can further improve stability of the cathode interface. When no doping element exists in the positive active material, the positive electrode will release

oxygen drastically. The process of oxygen release accelerates consumption of the additive A and the additive B. After doping, the consumption of the additive A and the additive B slows down, thereby effectively stabilizing the voltage drop of the battery during long-term storage. The joint effect of the positive electrode, the negative electrode, and the electrolytic solution can effectively alleviate the voltage drop of the battery.

## DETAILED DESCRIPTION

To make the objectives, technical solutions, and advantages of this application clearer, the following describes this application in more detail with reference to embodiments. Understandably, the specific embodiments described herein are merely intended to explain this application, but are not intended to limit this application.

The applicant hereof finds that a main reason for rapid voltage drop of a lithium-ion battery lies in side reactions at a cathode interface and an anode interface. Therefore, to slow down the voltage drop of the lithium-ion battery, the stability of the cathode interface and the anode interface needs to be enhanced, and reactions of an electrolytic solution at the two interfaces need to be reduced.

An embodiment of this application provides an electrochemical device, including an electrolytic solution. The electrolytic solution includes an additive A and an additive B.

The additive A includes at least one of additives represented by Formula I or Formula II:

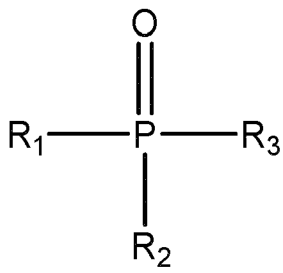

Formula I ,

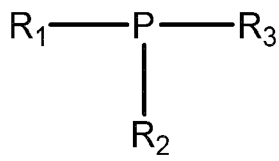

Formula II.

In the formulas above, R1 and R2 are each independently selected from fluorine, trimethylsilyl, alkyl, alkenyl, alkynyl, or a group represented by Formula a:

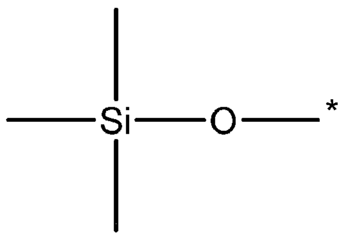

Formula a

In the formula above, $R_3$ is selected from fluorine, phenyl, alkyl, or alkenyl.

The additive B includes at least one of lithium difluorophosphate, lithium difluoro(oxalato)borate, or lithium bis(oxalato)borate.

The electrochemical device further includes a positive electrode plate. When a battery is in a fully charged state, continuous reactions between substances and the electrolytic solution at the cathode interface of the positive electrode plate lead to a decrease in the positive electrode potential, and eventually lead to a decrease in the open circuit voltage of the electrochemical device. When the additive A and the additive B are added in the electrolytic solution, the additive A and additive B can implement decomposition reactions at the cathode interface successively to form a double-protected inorganic CEI (cathode electrolyte interphase) layer, thereby improving voltage stability of the cathode interface under high potentials.

Specifically, the additive A includes at least one of the following compounds:

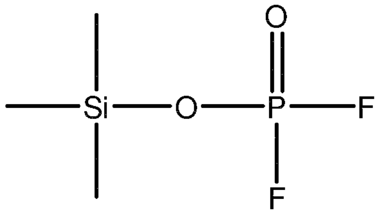

Compound 1 ,

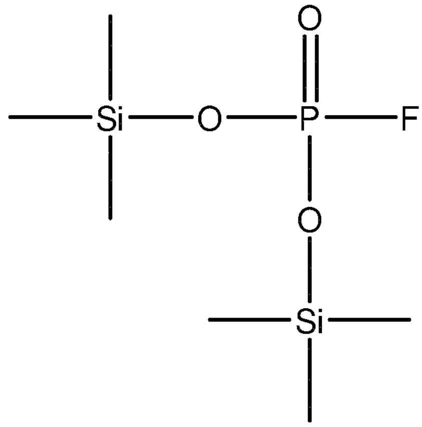

Compound 2,

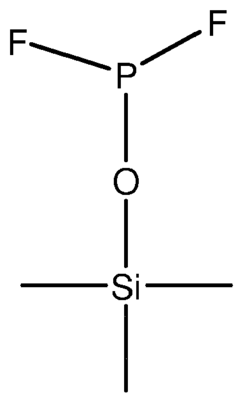

Compound 3 , or

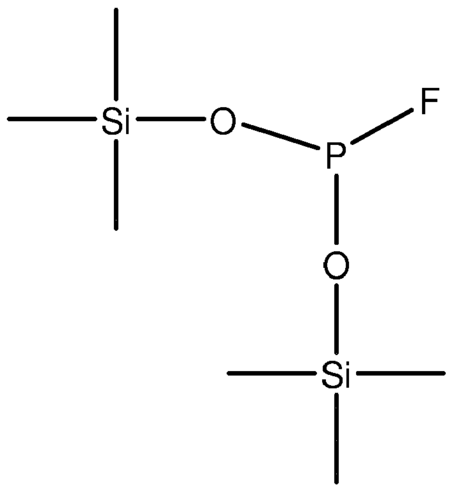

Compound 4.

In some exemplary embodiments, a mass percent of the additive A in the electrolytic solution is X ppm, a mass percent of the additive B in the electrolytic solution is Y%, and the electrochemical device satisfies condition 1, that is, $1.00 \times 10^3 \leq X/Y \leq 1.10 \times 10^6$.

Optionally, X satisfies condition 2, that is, $45 \leq X \leq 11000$. For example, X may be 50, 100, 500, 1000, 3000, 5000, 10000, or the like. When the mass percent X of the additive A in the electrolytic solution is lower than 50, the effect exerted by the inorganic CEI film formed by the additive A at the cathode interface in improving the stability of the cathode interface is limited. The electrolytic solution further includes a lithium salt and a nonaqueous organic solvent. The lithium salt and the additive A are dissolved in the nonaqueous organic solvent. When the mass percent X of the additive A in the electrolytic solution is higher than 10000, the high-content additive A is decomposed inside the electrochemical device to produce a large amount of acidic substances, thereby promoting the decomposition of the lithium salt and heat generation, corroding the positive active material, weakening the thermal stability of the positive active material, and leading to a mediocre effect of voltage stabilization. Preferably, X satisfies condition a, that is, $500 \leq X \leq 10000$.

Optionally, Y satisfies condition 3, that is, $0.005 \leq Y \leq 2.1$. For example, Y may be 0.01, 0.05, 0.1, 0.3, 0.5, 1.0, 1.5, 1.8, 2.0, or the like. Controlling the mass percent of the additive B in the electrolytic solution to fall within the range of 0.01% to 2% can alleviate the voltage drop of the electrochemical device. Preferably, Y satisfies condition b, that is, $0.01 \leq Y \leq 1.5$, and X and Y satisfy condition c, that is, $1.00 \times 10^3 \leq X/Y \leq 5 \times 10^5$.

In some exemplary embodiments, the electrolytic solution further includes an additive C. The additive C includes at least one of an ester compound or difluoropyridine. A reduction potential of the additive C at 25 °C falls within 0.8 V to 1.3 V. For example, the reduction potential may be 0.8 V, 0.9 V, 1.0 V, 1.1 V, 1.2 V, 1.3 V, or the like.

In some exemplary embodiments, the ester compound includes at least one of fluoroethylene carbonate, vinylene carbonate, triallyl phosphate, or tripropargyl phosphate.

In some exemplary embodiments, a mass percent of the additive C in the electrolytic solution is Z%, and Z

satisfies condition 4, that is, $0.01 \leq Z \leq 9$. Preferably, Z satisfies: $3 \leq Z \leq 8$. For example, Z may be 0.05, 0.5, 1, 2, 3, 5, 7, 8, or the like. When the additive C is added into the electrolytic solution, an effective solid electrolyte interphase (SEI) layer can be formed at an anode interface to ensure stability of the anode interface and further alleviate the voltage drop during storage.

Further, the electrochemical device further satisfies condition 4, that is, $1.11 \times 10^2 \leq X/(Y + Z) \leq 1.00 \times 10^5$.

The nonaqueous organic solvent is not particularly limited herein as long as the objectives of this application can be achieved. For example, the nonaqueous organic solvent may include at least one of a carbonate compound, a carboxylate compound, an ether compound, another organic solvent, or the like. For example, the carbonate compound may include at least one of ethylene carbonate (EC), diethyl carbonate (DEC), dimethyl carbonate (DMC), dipropyl carbonate (DPC), methyl propyl carbonate (MPC), ethylene propyl carbonate (EPC), ethyl methyl carbonate (MEC), propylene carbonate (PC), butylene carbonate (BC), vinyl ethylene carbonate (VEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, or the like.

The electrochemical device further includes a negative electrode plate. The negative electrode plate includes a negative material layer and a negative current collector. The negative material layer is disposed on the surface of the negative current collector. The negative material layer includes a negative active material. In some exemplary embodiments, the negative active material includes at least one of graphite or a silicon-based material. For example, the silicon-based material may include at least one of silicon, a silicon-oxygen compound, a silicon-carbon compound, or a silicon alloy.

When the negative active material includes a silicon-based material, the mass percent of silicon in the silicon-based material is M%. The value range of M is $1 \leq M \leq 100$. For example, M% may be 1%, 5%, 7%, 10%, 30%, 50%, 70%, or 100%.

When the negative active material includes artificial graphite, a peak intensity ratio D/G between a D band and a G band in a Raman spectrum of the artificial graphite is 0.25 to 0.95. For example, the D/G ratio may be 0.3, 0.35, 0.4, 0.5, 0.6, 0.7, 0.85, or 0.9. Controlling the D/G ratio to fall within the range of 0.25 to 0.95 facilitates the additive C to form a more stable polymer SEI layer at the anode interface, and is rather effective in stabilizing the voltage of the lithium-ion battery.

The negative active material layer may further include a negative conductive agent and/or a negative binder. The negative conductive agent is not particularly limited herein as long as the objectives of this application can be achieved. For example, the negative conductive agent may include at least one of carbon black, acetylene black, Ketjen black, graphite sheets, graphene, carbon nanotubes, carbon fibers, or carbon nanowires. The negative binder is not particularly limited herein as long as the objectives of this application can be achieved. For example, the negative binder may include at least one of carboxymethyl cellulose (CMC), polyacrylic acid, polyacrylic acid sodium salt, polyacrylate, polyvinylpyrrolidone, polyaniline, polyimide, polyamide imide, polysiloxane, styrene-butadiene rubber, epoxy resin, polyester resin, polyurethane resin, or polyfluorene.

The negative current collector is not particularly limited herein as long as the objectives of this application can be achieved. For example, the negative current collector may include at least one of a copper foil, a nickel foil, or a carbon-based current collector.

The positive electrode plate includes a positive material layer and a positive current collector. The positive material layer is disposed on the surface of the positive current collector. The positive material layer includes a positive active material. In some exemplary embodiments, the positive active material includes a ternary material. The ternary material includes at least one of a nickel-cobalt-aluminum-based ternary material or a nickel-cobalt-manganese-based ternary material. For example, the positive active material may include at least one of lithium nickel cobalt manganese oxide or lithium nickel cobalt aluminum oxide. In some exemplary embodiments, the positive active material may further include at least one of lithium cobalt oxide, lithium manganese oxide, lithium iron phosphate, lithium manganese iron phosphate, or lithium nickel manganese oxide.

In some exemplary embodiments, the positive active material includes a doping element. The doping element includes at least one of aluminum or zirconium, thereby alleviating the voltage drop of the manufactured electrochemical device and exerting a stronger effect in stabilizing the cathode interface.

The positive material layer further includes a positive conductive agent and/or a positive binder. The positive conductive agent is not particularly limited herein as long as the objectives of this application can be achieved. For example, the positive conductive agent may include at least one of conductive carbon black, acetylene black, Ketjen black, graphite sheets, graphene, carbon nanotubes, or carbon fibers. The positive binder is not particularly limited herein as long as the objectives of this application can be achieved. For example, the positive binder may include at least one of polyvinylidene fluoride, poly(vinylidene fluoride-co-hexafluoropropylene), polyacrylonitrile, polyacrylate, polyacrylic acid, polyacrylic acid sodium salt, poly(styrene-co-acrylate), poly(styrene-co-butadiene), polyamide, sodium carboxymethyl cellulose, polyvinyl acetate, polyvinylpyrrolidone, polyvinyl ether, polytetrafluoroethylene, polyhexafluoropropylene, or polymethyl methacrylate.

The positive current collector is not particularly limited in this application. The positive current collector may be any positive current collector well known in the art such as an aluminum foil, an aluminum alloy foil, or a composite current collector.

The electrochemical device further includes a separator. The separator is disposed between the positive electrode plate and the negative electrode plate to prevent a short circuit between the positive electrode plate and the negative electrode plate. The separator may include a polyethylene (PE) film or a polypropylene (PP) film. The electrochemical device further includes a positive tab, a negative tab, and an outer package. After the positive electrode plate, the separator, and the negative electrode plate are stacked sequentially or are stacked on one side and wound, the positive electrode plate is connected to the positive tab, and the negative electrode plate is connected to the negative tab to form an electrode assembly. The electrode assembly is disposed in an inner space of the outer package. The positive tab and the negative tab are led from the inner space of the outer package to the outer space of the outer package, so that the positive tab and the negative tab can be electrically connected to an external circuit. Subsequently, an electrolytic solution is injected into the inner space of the outer package, and the outer package is closed to form an electrochemical device. The outer package may be an aluminum plastic film packaging bag, or an aluminum foil packaging bag.

An embodiment of this application further provides an electronic device, including the electrochemical device.

The electronic device is not particularly limited in this application, and may be any electronic device known in the prior art. In some embodiments, the electronic device includes, but is not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

The following describes this application in more detail with reference to specific embodiments by using a lithium-ion battery as an example of the electrochemical device.

I. Method for testing the voltage drop

Charge a battery at a constant current of 0.5 C under a 25 °C condition until the voltage reaches 4.45 V, and then charge the battery at a constant voltage (CV) until the current reaches 0.025 C. After the battery is fully charged, store the fully charged battery in a 60 °C oven for 30 days, and then take out the battery and let the battery temperature drop to a room temperature. Measure the open circuit voltage of the battery in groups, each group containing three batteries. Average out the measured values of the three batteries in each group to obtain a voltage value of this group.

II. Method for preparing a lithium-ion battery

1. Preparing a positive electrode plate

Dissolve lithium cobalt oxide as a positive active material, polyvinylidene difluoride (PVDF) as a positive binder, and conductive carbon black (Super-P) as a positive conductive agent in N-methyl-pyrrolidone (NMP) at a mass ratio of 96: 2: 2. Mix the ingredients well to make a positive slurry. Coat a 12 μm-thick positive current collector aluminum foil with the positive slurry evenly, bake the aluminum foil at 120 °C for 1 hour, and then perform compaction and cutting to obtain a positive electrode plate.

In each embodiment and comparative embodiment, add aluminum and/or zirconium into the positive active material correspondingly and stir well. Coat a foil with the slurry according to the foregoing steps to obtain a positive electrode plate doped with the aluminum and/or zirconium.

2. Preparing a negative electrode plate

Dissolve artificial graphite as a negative active material, sodium carboxymethylcellulose (CMC) as a negative binder, and styrene-butadiene rubber as a negative binder in water at a mass ratio of 85: 2: 13. Mix and stir well to obtain a negative slurry. Coat a 12 μm-thick negative current collector 220 copper foil with the negative slurry evenly. Bake the copper foil at 120 °C for 1 hour to obtain a negative electrode plate, and then perform compaction and cutting to obtain a negative electrode plate.

3. Preparing an electrolytic solution

Mix ethylene carbonate and diethyl carbonate at a mass ratio of 3: 7 to obtain a nonaqueous organic solvent, and add a lithium salt $LiPF_6$ with a concentration of 1 mol/L into the nonaqueous organic solvent to obtain an electrolyte base material.

In each embodiment and comparative embodiment, add the additive A, the additive B, and the additive C into the electrolyte base material correspondingly to obtain an electrolytic solution.

4. Preparing a lithium-ion battery

Use a polypropylene film as a separator. Stack the positive electrode plate, the separator, and the negative electrode plate in sequence, and position the separator between the positive electrode plate and the negative electrode plate to separate the positive electrode plate from the negative electrode plate, and then wind the stacked structure. Connect a positive tab to the positive electrode plate, and connect a negative tab to the negative electrode plate to obtain an electrode assembly. Put the electrode assembly into the inner space of the outer package, where the outer package is an aluminum foil packaging bag. Lead the positive tab and the negative tab from the inner space of the outer package to the outer space of the outer package. Bake the packaged electrode assembly at 80 °C to dehydrate, and inject an electrolytic solution into the inner space of the outer package. Perform steps such as vacuum packaging, standing, chemical formation, and shaping to obtain a lithium-ion battery.

Prepare the lithium-ion batteries in each embodiment and comparative embodiment according to the above method and test the batteries.

In Comparative Embodiments 1-1 to 1-3 and Embodiments 1-1 to 1-22 in Table 1, the positive active material is lithium cobalt oxide ($LiCoO_2$), and the negative active material is artificial graphite. The D/G ratio of the artificial graphite is 0.25.

**Table 1**

| | Additive A | Additive B | X (ppm) | Y (%) | X/Y | Voltage after storage (V) |
|---|---|---|---|---|---|---|
| Comparative Embodiment 1-1 | / | / | / | / | / | 3.51 |
| Comparative Embodiment 1-2 | Compound 1 | / | 50 | / | / | 3.52 |
| Comparative Embodiment 1-3 | / | Lithium difluorophosphate | / | 0.01 | / | 3.53 |
| Embodiment 1-1 | Compound 1 | Lithium difluorophosphate | 45 | 0.01 | $4.50\times10^3$ | 3.60 |
| Embodiment 1-2 | Compound 1 | Lithium difluorophosphate | 50 | 0.01 | $5.00\times10^3$ | 3.67 |
| Embodiment 1-3 | Compound 1 | Lithium difluorophosphate | 200 | 0.01 | $2.00\times10^4$ | 3.80 |
| Embodiment 1-4 | Compound 1 | Lithium difluorophosphate | 1000 | 0.01 | $1.00\times10^5$ | 3.84 |
| Embodiment 1-5 | Compound 1 | Lithium difluorophosphate | 5000 | 0.01 | $5.00\times10^5$ | 4.04 |
| Embodiment 1-6 | Compound 1 | Lithium difluorophosphate | 10000 | 0.01 | $1.00\times10^6$ | 4.10 |
| Embodiment 1-7 | Compound 1 | Lithium difluorophosphate | 11000 | 0.01 | $1.10\times10^6$ | 4.10 |

(continued)

| | Additive A | Additive B | X (ppm) | Y (%) | X/Y | Voltage after storage (V) |
|---|---|---|---|---|---|---|
| Embodiment 1-8 | Compound 1 | Lithium difluorophosphate | 1000 | 0.005 | $2.00\times10^5$ | 3.61 |
| Embodiment 1-9 | Compound 1 | Lithium difluorophosphate | 1000 | 0.02 | $5.00\times10^4$ | 3.85 |
| Embodiment 1-10 | Compound 1 | Lithium difluorophosphate | 1000 | 0.1 | $1.00\times10^4$ | 3.98 |
| Embodiment 1-11 | Compound 1 | Lithium difluorophosphate | 1000 | 0.5 | $2.00\times10^3$ | 4.01 |
| Embodiment 1-12 | Compound 1 | Lithium difluorophosphate | 1000 | 1 | $1.00\times10^3$ | 4.11 |
| Embodiment 1-13 | Compound 1 | Lithium difluorophosphate | 1000 | 1.5 | $6.67\times10^2$ | 4.15 |
| Embodiment 1-14 | Compound 1 | Lithium difluorophosphate | 1000 | 2 | $5.00\times10^2$ | 4.17 |
| Embodiment 1-15 | Compound 1 | Lithium difluorophosphate | 1000 | 2.1 | $4.76\times10^2$ | 4.17 |
| Embodiment 1-16 | Compound 2 | Lithium difluorophosphate | 10000 | 0.2 | $5.00\times10^4$ | 4.13 |
| Embodiment 1-17 | Compound 3 | Lithium difluoro (oxalato)borate | 10000 | 0.2 | $5.00\times10^4$ | 4.08 |
| Embodiment 1-18 | Compound 4 | Lithium bis (oxalato)borate | 10000 | 0.2 | $5.00\times10^4$ | 4.12 |
| Embodiment 1-19 | Compound 1<br>Compound 2 | Lithium bis (oxalato)borate | 500+500 | 0.5 | $2.00\times10^3$ | 3.89 |
| Embodiment 1-20 | Compound 2 | Lithium difluorophosphate<br>Lithium bis (oxalato)borate | 1000 | 0.5+0.5 | $1.00\times10^3$ | 3.94 |
| Embodiment 1-21 | Compound 2<br>Compound 3 | Lithium difluoro (oxalato)borate<br>Lithium bis (oxalato)borate | 500+500 | 0.5+0.5 | $1.00\times10^3$ | 4.01 |
| Embodiment 1-22 | Compound 2<br>Compound 3<br>Compound 4 | Lithium difluorophosphate<br>Lithium difluoro (oxalato)borate<br>Lithium bis (oxalato)borate | 1000+1000+500 | 0.5+0.5+0.3 | $1.92\times10^3$ | 3.91 |

In Comparative Embodiments 1-1 to 1-3 in Table 1, the additive A or the additive B are added, or neither of the additives is added, in the electrolytic solution. The voltage drop of the lithium-ion battery is relatively severe after storage. In Embodiments 1-1 to 1-22 in Table 1, when both the additive A and the additive B are added, the mass percent of the additive A in the electrolytic solution is 45 ppm to 11000 ppm, and the mass percent of the additive B in the electrolytic

solution is 0.005% to 2.1%, the voltage drop of lithium-ion battery is alleviated to varying degrees. According to Embodiments 1-1 to 1-7, preferably, when the mass percent of the additive A in the electrolytic solution is 500 ppm to 10000 ppm, and, according to Embodiments 1-8 to 1-15, preferably, when the mass percent of the additive B in the electrolytic solution is 0.01% to 1.5%, the voltage drop of lithium-ion battery is alleviated rather effectively.

In Embodiments 2-1 to 2-12 in Table 2, the positive active material is $LiCoO_2$, the negative active material is graphite, the D/G ratio of the artificial graphite is 0.25, and the electrolytic solution is doped with Compound 1 at a mass percent of 1000 ppm, lithium difluorophosphate at a mass percent of 0.5%, and the additive C.

**Table 2**

| | Additive C | Z(%) | X/(Y+Z) | Voltage after storage (V) |
|---|---|---|---|---|
| Embodiment 1-11 | / | / | / | 4.01 |
| Embodiment 2-1 | Fluoroethylene carbonate | 0.01 | $1.00\times10^5$ | 4.01 |
| Embodiment 2-2 | Fluoroethylene carbonate | 0.05 | $2.00\times10^4$ | 4.05 |
| Embodiment 2-3 | Fluoroethylene carbonate | 0.1 | $1.00\times10^4$ | 4.10 |
| Embodiment 2-4 | Fluoroethylene carbonate | 1 | $1.00\times10^3$ | 4.15 |
| Embodiment 2-5 | Fluoroethylene carbonate | 3 | $3.33\times10^2$ | 4.19 |
| Embodiment 2-6 | Fluoroethylene carbonate | 5 | $2.00\times10^2$ | 4.21 |
| Embodiment 2-7 | Fluoroethylene carbonate | 8 | $1.25\times10^2$ | 4.22 |
| Embodiment 2-8 | Fluoroethylene carbonate | 9 | $1.11\times10^2$ | 4.22 |
| Embodiment 2-9 | Fluoroethylene carbonate<br>Vinylene carbonate | 0.5+0.3 | $1.25\times10^3$ | 4.13 |
| Embodiment 2-10 | Vinylene carbonate<br>Triallyl phosphate | 0.5+0.1 | $1.67\times10^3$ | 4.16 |
| Embodiment 2-11 | Difluoropyridine<br>Tripropargyl phosphate | 0.5+0.3 | $1.25\times10^3$ | 4.11 |
| Embodiment 2-12 | Fluoroethylene carbonate<br>Vinylene carbonate<br>Tripropargyl phosphate | 1+0.5+0.3 | $5.56\times10^2$ | 4.17 |

In Embodiments 2-1 to 2-12 in Table 2, the mass percent Z% of the additive C in the electrolytic solution is 0.01% to 9%, and the voltage value of the lithium-ion battery can be increased. Preferably, the mass percent Z% of the additive C in the electrolytic solution is 3% to 8%. With the increase of the mass percent of the additive C in the electrolytic solution, the voltage value of the lithium-ion battery is increased. The added additive C can form an effective polymer SEI layer at the anode interface to alleviate the side reactions at the anode interface, effectively suppress the increase of the negative electrode voltage, and stabilize the voltage of the lithium-ion battery.

In Embodiments 3-1 to 3-6 in Table 3, the positive active material is $LiCoO_2$, the negative active material is artificial graphite, and the electrolytic solution is doped with Compound 1 at a mass percent of 1000 ppm, lithium difluorophosphate at a mass percent of 0.5%, and the additive C at a mass percent of 1%.

**Table 3**

| | Additive C | Z (%) | D/G | Voltage after storage (V) |
|---|---|---|---|---|
| Embodiment 2-4 | Fluoroethylene carbonate | 1 | 0.25 | 4.15 |
| Embodiment 3-1 | Fluoroethylene carbonate | 1 | 0.30 | 4.15 |
| Embodiment 3-2 | Fluoroethylene carbonate | 1 | 0.40 | 4.17 |
| Embodiment 3-3 | Fluoroethylene carbonate | 1 | 0.55 | 4.18 |
| Embodiment 3-4 | Fluoroethylene carbonate | 1 | 0.70 | 4.19 |

(continued)

| | Additive C | Z (%) | D/G | Voltage after storage (V) |
|---|---|---|---|---|
| Embodiment 3-5 | Fluoroethylene carbonate | 1 | 0.90 | 4.20 |
| Embodiment 3-6 | Fluoroethylene carbonate | 1 | 0.95 | 4.20 |
| Embodiment 3-7 | Fluoroethylene carbonate | 5 | 0.70 | 4.22 |

In Embodiments 2-4 and 3-1 to 3-7 in Table 3, the D/G ratio of the negative active material graphite is adjusted to fall within a range of 0.25 to 0.95, the voltage drop of the lithium-ion battery can be alleviated to varying degrees. According to Embodiments 3-1 to 3-5, controlling the D/G ratio of the artificial graphite as the negative active material to fall within the range of 0.40 to 0.90 facilitates the additive C to form a more stable polymer SEI layer at the anode interface, and is rather effective in stabilizing the voltage of the lithium-ion battery. When the D/G ratio of the artificial graphite is less than 0.25, graphite edges related to intercalation or deintercalation of lithium ions in the artificial graphite are not enough to ensure effective reaction of the additive C on the artificial graphite. However, when the D/G ratio of the artificial graphite is higher than 0.95, it means that the amount of non-crystalline carbon on the surface of the artificial graphite is relatively large, and the irreversible capacity is high, thereby hindering exertion of the capacity of the battery. Therefore, the D/G ratio of the artificial graphite is controlled to fall within the range of 0.25 to 0.95.

In Embodiments 4-1 to 4-3 in Table 4, the positive active material is $LiCoO_2$, the negative active material is artificial graphite, the D/G ratio of the artificial graphite is 0.4, and the electrolytic solution is doped with Compound 1 at a mass percent of 1000 ppm, lithium difluorophosphate at a mass percent of 0.5%, and fluoroethylene carbonate at a mass percent of 5%.

**Table 4**

| | Element | H (%) | Voltage after storage (V) |
|---|---|---|---|
| Embodiment 3-7 | No aluminum or zirconium | / | 4.22 |
| Embodiment 4-1 | Aluminum | 0.45 | 4.27 |
| Embodiment 4-2 | Zirconium | 0.18 | 4.25 |
| Embodiment 4-3 | Aluminum + zirconium | 0.30+0.15 | 4.26 |

In Table 4, according to Embodiments 3-2, 4-1, and 4-3, the positive active material includes at least one of aluminum or zirconium. Based on a mass of the positive active material, a mass percent of the aluminum or zirconium is H%, and H satisfies: $0.01 \leq H \leq 1.00$. The voltage drop of the battery is relatively small, and the effect in stabilizing the solid interface is stronger.

The aluminum or zirconium added in the positive active material serve to stabilize the cathode interface, reduce the consumption of additives A and B, and ultimately alleviate the voltage drop of the battery. When the positive active material contains neither aluminum nor zirconium, the positive electrode will release oxygen drastically. The process of oxygen release accelerates consumption of the additive A and the additive B. After doping, the consumption of the additive A and the additive B slows down, thereby effectively stabilizing the voltage drop of the battery during long-term storage.

In the description of this application, a list of items referred to by the terms such as "at least one of", "at least one thereof" and other similar terms may mean any combination of the listed items. For example, if items A and B are listed, the phrases "at least one of A and B" and "at least one of A or B" mean: A alone; B alone; or both A and B. In another example, if items A, B, and C are listed, the phrases "at least one of A, B, and C" and "at least one of A, B, or C" mean: A alone; B alone; C alone; A and B (excluding C); A and C (excluding B); B and C (excluding A); or all of A, B, and C.

The foregoing descriptions are merely exemplary embodiments of this application, but are not intended to limit this application. Any modifications, equivalent substitutions, and improvements made without departing from the principles of this application still fall within the protection scope of this application.

## Claims

1. An electrochemical device, comprising an electrolytic solution, wherein the electrolytic solution comprises an additive

A and an additive B;

wherein the additive A comprises at least one of additives represented by Formula I or Formula II:

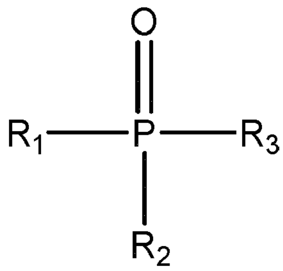

Formula I ,

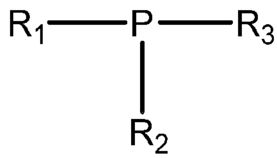

Formula II ,

wherein $R_1$ and $R_2$ are each independently selected from fluorine, trimethylsilyl, alkyl, alkenyl, alkynyl, or a group represented by Formula a:

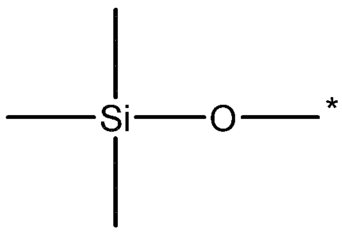

Formula a,

wherein $R_3$ is selected from fluorine, phenyl, alkyl, or alkenyl;
wherein the additive B comprises at least one of lithium difluorophosphate, lithium difluoro(oxalato)borate, or lithium bis(oxalato)borate.

**2.** The electrochemical device according to claim 1, wherein the additive A comprises at least one of Compound 1, Compound 2, Compound 3, or Compound 4:

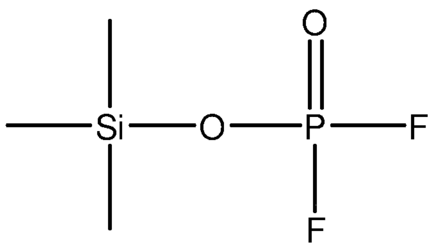

Compound 1 ,

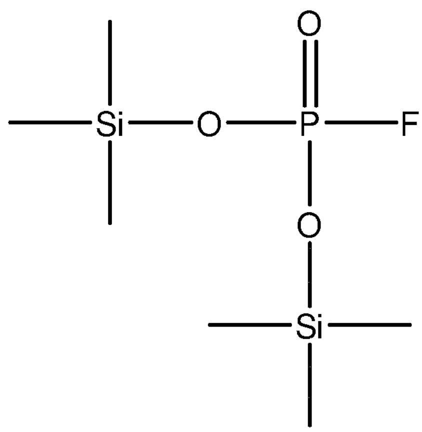

Compound 2,

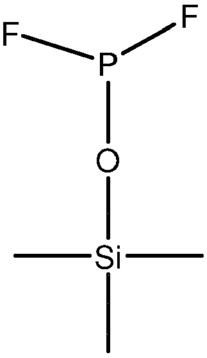

Compound 3

, or

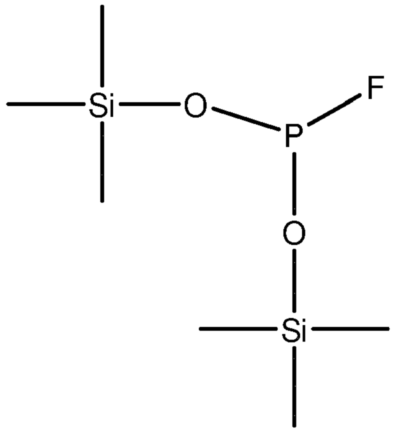

Compound 4.

3. The electrochemical device according to claim 1 or 2, wherein a mass percent of the additive A in the electrolytic solution is X ppm, a mass percent of the additive B in the electrolytic solution is Y%, wherein $1.00 \times 10^3 \leq X/Y \leq 1.10 \times 10^6$ and $45 \leq X \leq 11000$.

4. The electrochemical device according to claim 3, wherein $0.005 \leq Y \leq 2.1$.

5. The electrochemical device according to claim 1 or 2, wherein a mass percent of the additive A in the electrolytic solution is X ppm, a mass percent of the additive B in the electrolytic solution is Y%, wherein $1.00 \times 10^3 \leq X/Y \leq 1.10 \times 10^6$ and $0.005 \leq Y \leq 2.1$.

6. The electrochemical device according to claim 5, wherein $45 \leq X \leq 11000$.

7. The electrochemical device according to any one of claims 3 to 6, wherein the electrochemical device satisfies at least one of the following conditions:

$$\text{condition a: } 500 \leq X \leq 10000;$$

$$\text{condition b: } 0.01 \leq Y \leq 1.5;$$

or

$$\text{condition c: } 1.00 \times 10^3 \leq X/Y \leq 5 \times 10^5.$$

8. The electrochemical device according to any one of claims 1 to 7, wherein the electrolytic solution further comprises an additive C, the additive C comprises at least one of an ester compound or difluoropyridine, and a reduction potential of the additive C at 25 °C falls within 0.8 V to 1.3 V.

9. The electrochemical device according to claim 8, wherein the additive C comprises the ester compound; and the ester compound comprises at least one of fluoroethylene carbonate, vinylene carbonate, triallyl phosphate, or tripropargyl phosphate.

10. The electrochemical device according to claim 8 or 9, wherein a mass percent of the additive C in the electrolytic solution is Z%, and $0.01 \leq Z \leq 9$.

11. The electrochemical device according to any one of claims 8 to 10, wherein a mass percent of the additive C in the electrolytic solution is Z%, and $3 \leq Z \leq 8$.

**12.** The electrochemical device according to any one of claims 1 to 11, wherein the electrochemical device further comprises a negative electrode plate, the negative electrode plate comprises a negative material layer, and the negative material layer comprises a negative active material; and
the negative active material comprises artificial graphite, and a peak intensity ratio D/G between a D band and a G band in a Raman spectrum of the artificial graphite is 0.25 to 0.95.

**13.** The electrochemical device according to any one of claims 1 to 12, wherein the electrochemical device further comprises a positive electrode plate, the positive electrode plate comprises a positive material layer, the positive material layer comprises a positive active material, and the positive active material comprises a ternary material;
the positive active material further comprises at least one of aluminum or zirconium; and based on a mass of the positive active material, a mass percent of the at least one of the aluminum or the zirconium is H%, and $0.01 \leq H \leq 1.00$.

**14.** An electronic device, wherein the electronic device comprises the electrochemical device according to any one of claims 1 to 13.

Europäisches Patentamt
European Patent Office
Office européen des brevets

## PARTIAL EUROPEAN SEARCH REPORT

under Rule 62a and/or 63 of the European Patent Convention. This report shall be considered, for the purposes of subsequent proceedings, as the European search report

Application Number
EP 23 22 0248

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | CN 112 625 062 A (ZHUHAI COSMX BATTERY CO LTD) 9 April 2021 (2021-04-09)<br>* claims 1-9 *<br>* example 9 *<br>----- | 1-9,12, 14<br>10,11,13 | INV.<br>H01M10/0525<br>H01M4/525<br>H01M4/587<br>H01M4/38<br>H01M10/0568<br>H01M10/0569<br>H01M10/0567<br>H01M10/42 |
| X<br>A | CN 103 178 300 A (NINGDE AMPEREX TECHNOLOGY LTD) 26 June 2013 (2013-06-26)<br>* claims 1-3,6 *<br>* paragraph [0034] *<br>----- | 1,8,9, 12,14<br>2-7,10, 11,13 | |

TECHNICAL FIELDS SEARCHED (IPC)

H01M
C07F

### INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

see sheet C

2

| Place of search | Date of completion of the search | Examiner |
|---|---|---|
| The Hague | 6 September 2024 | Domínguez Gutiérrez |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04E07)

Europäisches Patentamt
European Patent Office
Office européen des brevets

# INCOMPLETE SEARCH SHEET C

Application Number
EP 23 22 0248

Claim(s) searched incompletely:
1-14

Reason for the limitation of the search:

The EPO considered that the application does not comply with the EPC to such an extent that it is impossible to carry out a meaningful search into the state of the art on the basis of all of the subject-matter claimed (see B-VIII, 1, 2 and 3), and invited the applicant to file a statement under R. 63(1) EPC indicating the subject-matter to be searched.

The applicant has replied in time to the invitation under Rule 63(1), and requested to carry out the search on basis of an alternative wording for claim 1.
This limitation is found sufficiently clarifying and is therefore accepted.

The Applicant is kindly reminded that amendments may relate neither to subject-matter that was excluded from the search following an invitation under Rule 63(1) EPC, nor to non-searched subject-matter that does not combine with the originally claimed invention or group of inventions to form a single general inventive concept (Rule 137(5) EPC).

## ANNEX TO THE EUROPEAN SEARCH REPORT ON EUROPEAN PATENT APPLICATION NO.

EP 23 22 0248

This annex lists the patent family members relating to the patent documents cited in the above-mentioned European search report. The members are as contained in the European Patent Office EDP file on
The European Patent Office is in no way liable for these particulars which are merely given for the purpose of information.

06-09-2024

| Patent document cited in search report | Publication date | Patent family member(s) | Publication date |
|---|---|---|---|
| CN 112625062 A | 09-04-2021 | NONE | |
| CN 103178300 A | 26-06-2013 | NONE | |

EPO FORM P0459

For more details about this annex : see Official Journal of the European Patent Office, No. 12/82